# EUROPEAN PATENT APPLICATION

(11) **EP 2 223 600 A1**
(43) Date of publication of application: **01.09.2010**
(21) Application number: 09002336.7
(22) Date of filing: 19.02.2009
(51) Int. Cl.: A01N 63/04, A01N 25/14, A01P 5/00

(54) **Granules containing filamentary fungi and method of preparation thereof**

(71) Applicant: Urea Casale S.A., 6900 Lugano-Besso (CH)
(72) Inventor: Panchaud-Mirabel, Elisabeth, 31200 Toulouse (FR)
(74) Representative: Zardi, Marco

(57) **Abstract**

In a method for preparing granules containing filamentary fungi, a filamentary fungi culture is mixed with at least one modified starch and a starchy flour, then fillers and possible nutrients are added to the obtained product, obtaining a paste that is subsequently subjected to granulation and drying.

## Description

### Field of application

The present invention regards the technical field of plant health products. In particular, it refers to a method for producing - at industrial level - granules, highly dispersible in water, containing a plant health agent, and more particularly a nematophagous fungus. The invention also includes the water-dispersible granules thus obtained.

### Introduction

Plant-parasitic nematodes attacking almost all types of crops causing annual losses worldwide amounting to about 500 million U.S. dollars have been known over the years. Extremely resistant to chemical treatments, their destruction implies the use of products that are poorly selective and generally harmful to the natural environment.

Starting from the Earth summit, held in Rio in 1992, and according to the recent bio-environmental laws, numerous traditional nematocides are prohibited year after year, leaving farmers without protection regarding a problem that can be more or less drastic, depending on the climatic regions and the crops. Hence the growth of interest towards alternative or organic methods, which do not imply the use of conventional chemical pesticides. However, in order for them to develop, such methods for "organic" control solutions are not only required to prove their efficiency, but they must also be easy and practical to implement for the farmer, in a manner similar to that of a conventional product.

Among the organic pesticide methods, the use of antagonistic microorganisms represents a more and more common practice. For example, known are anti-mosquito treatments based on the diffusion of a bacterium: the *Bacillus thuringiensis*. Likewise, it is possible to control the whitefly affecting the vegetable crops, (*Trialeurodes vaporarlorum*)*,* using the spores of a parasitic fungus of the larvae of aleurodes (*Verticillium leucanii*).

The filamentary fungi (Deuteromycetes, commonly referred to as moulds) are characterised by thin tubular formations (hyphae), generally transparent, having a diameter in the micron range; the entirety of the hyphae forms the mycelium; they reproduce asexually through conidia. Some filamentary fungi belonging to the Moniliales family (in particular *Arthrobothrys conoides* Dreschsler) have proved useful against nematodes: they feed on nematodes, disinfecting the soil of these parasites.

In order to efficiently exploit the filamentary fungi, it is necessary to have stable formulations, containing a high fungi count, which are easy to manipulate and administer to the soil. Unfortunately, the production and preservation techniques for these fungi, in particular for the nematophagous fungi, are still empirical and the results obtained up to date are not entirely satisfactory.

Patent application number WO-A-2005078067 describes efficient culture media for the growth of filamentary fungi, without indicating particular methods of formulation and/or administration. Patent application GB-A-857161 describes the preparation of inorganic carriers (pumice, vermiculite, asbestos wool) surface-treated with a nematophagous fungi culture.

The United States patent US 5,811,092 describes the surface treatment of corn grains with nematophagous fungi cultures; the corn thus treated is mixed with small portions of soil to form inocula and the latter are distributed in the soil to be treated; the method is generally efficient, but the fungi count of the grains is quite variable and the administration in the soil is scarcely homogeneous.

The patent application number US 2007/0292932 describes the preparation of jellied pellets containing nematophagous fungi, suitable for administration to the soil; however, the preparation, preservation and handling of these pellets is quite complicated.

Furthermore, the products of the prior art are scarcely dispersible in water and require to be dispersed in the soil in solid form; the solid particles remain in the surface and do not allow a suitable penetration of the fungi into the deeper layers of the soil; the penetration is obtained only at the cost of further soil movement operations (ploughing).

Therefore, regardless of the abovementioned developments, none of the products identified up to date is entirely satisfactory. A particular difficulty is that of providing a dry granular product, hence easy to store and manipulate, having a high dispersibility in water and guaranteeing a more than satisfactory viability of the culture, the latter two conditions being disadvantaged in dried conditions.

The present invention is based on a method for manufacturing, at industrial level, filamentary fungi, and more in particular nematophagous fungi, in a dry granular form capable of guaranteeing stability, viability and ease to use. In particular, the invention allows obtaining compositions with high fungi count, easy to manipulate and administer to the soil, capable of performing high and uniform nematocide activity on the treated surface; the compositions are obtainable by means of a preparation method that is easy, inexpensive and harmless for the viability of mycelia.

### Summary of the invention

The present invention describes a method for incorporating the filamentary fungi in a particular formulation in solid phase, specifically studied to allow a simple, homogeneous and efficient administration of the fungi to the soil. The invention is based on the treatment of a filamentary fungi culture which leads to obtaining dry granules with high fungi count and easily dispersible in water. The treatment comprises mixing a culture medium, previously inoculated with a filamentary fungus, with a starchy flour and a modified starch. The resulting product is then mixed with particular fillers and possible nutrients, in proportions suitable to form an easily granulable paste; the granules, obtainable by means of per se known techniques, are recovered and dried up to a determined moisture content, generally comprised between 5 and 15%. The granular product thus obtained is particularly suitable to safeguard the viability of the mycelia, is dry to the touch, easily manipulatable by the operators and is highly dispersible in water. More in detail, the method comprises the following steps:
a) growing the filamentary fungi in a suitable liquid culture medium, for a determined period of time;
b) mixing the product of a) with a starchy flour and a modified starch;
c) mixing the product of b) with suitable fillers and possible nutrients, up to obtaining a granulable paste;
d) forming granules, recovering them and then drying them reducing their moisture content to a value in the range between 5 and 15%.

A further object of the present invention is represented by the granular product as such, comprising in particular the components used in point b). The invention further includes the nematocide compositions comprising the abovementioned granular product, and the use of the abovementioned products for treating soils and/or cultures infested by nematodes.

### Description of the figures

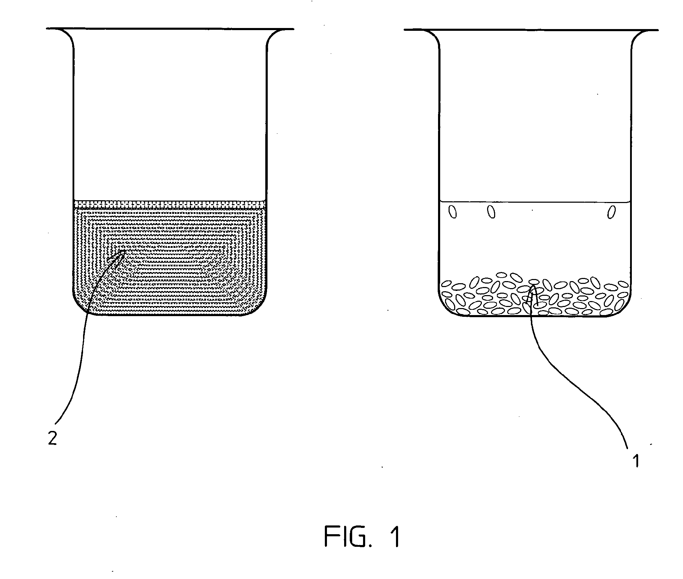

Figure 1: comparison between the stirring of a suspension of the granules of the prior technique, taken as a reference (on the right), and a suspension of the present dispersible granules (on the left).

### Detailed description of the invention

The present invention may be applied to all commonly known filamentary fungi; advantageously, the fungus used is a nematocide fungus, belonging for example to the Moniliales family; particularly preferred within this family, are the fungi of the *Arthrobotrys* genus of the *conoides* species, in particular *Arthrobotrys conoides* Dreschsler.

The culture medium for filamentary fungi may be selected from among those known to the field. According to a preferred embodiment, it comprises at least one source of carbon selected from the group of products made up of molasses, malt extract, sucrose, and at least one source of organic nitrogen selected from among the yeast extract and the so-called "corn steep liquor". The preparation of such medium is widely described in the patent application WO-A-2005078067, incorporated herein by reference. In such medium, the source of carbon preferably represents 70 to 85% by weight of the dry weight of the culture medium and the abovementioned source of organic nitrogen represents 15 to 30% by weight of the dry weight of the culture medium. The culture medium may further comprise a source of mineral nitrogen, made up of nitrates or ammonium salts. In the general case, this source of mineral nitrogen is gradually added to the culture medium during the growth of the fungus, in amounts not exceeding 10% by weight of the dry weight of the culture medium, preferably comprised between 5 and 8%.

A first preferred culture medium is made up of 75-85% of malt extract and 15-25% of yeast extract, the percentages being given by weight on the dry weight of the culture medium. Another useable culture medium comprises 60-65% of molasses, 10-15% of sucrose, 10-15% of corn steep liquor and 10-15% of yeast extract. This culture medium also contains, in addition, 5 - 8% of a source of mineral nitrogen, in particular diammonium hydrogen phosphate. A last preferred culture medium contains two sources of carbon, i.e. malt extract, in amounts between 25-30%, and molasses, in amounts between 40-45%, as well as corn steep liquor, in amounts between 25-30%.

The malt extract is obtained by germinating cereals, generally barley. When germinating, there is the production of enzymes and more in particular amylase, which allow the transformation of starch into sugars. The malt extract contains about 60% of maltose, vitamins and other numerous oligoelements.

The molasses represents a by-product of sugar industry and is in form of a viscous brown-black liquid, containing 10% of water, 35% of sucrose, 20% of other sugars and 15% of ashes. The yeast extract is obtained by autolysis of *Saccharomyces cerevisiae* and is in the form of a pale yellow coloured fine powder, easily soluble in water. The yeast extract contains peptides, free amino acids, purinic and pyrimidinic bases, as well as water soluble vitamins of group B. The yeast extract has a total nitrogen content of 10% and an α -amine nitrogen content of 5%.

The corn steep liquor is obtained by macerating the corn at 50°C, for 24-48 hours, in water containing sulphur dioxide. The latter reagent allows binding the protein network that surrounds the grains and offers the advantage of preventing the development of unwanted microorganisms during the maceration. The corn steep liquor has a total nitrogen content of 7%, a content of α-amine nitrogen of 1.7% and also contains sugars amounting to 5%, 4% of potassium, 3% of phosphorous and 17% of minerals.

In the production method according to the invention, the growth of the filamentary fungus in the abovementioned culture media is preferably performed for a period of 5-10 days, and at a constant temperature comprised between 23 and 30°C. In order to manufacture the granules, a mixture is prepared made up of a modified starch and a starchy flour. In this mixture, the modified starch preferably represents 30-60% by weight, (more preferably 33%), while the flour is the remaining 70-40% (more preferably 67%), these percentages referring to the dry matter. The preferred modified starch is Cleargum, (*sodium octenyl succinate starch*), a product obtained by enzymatic hydrolysis of a waxy corn starch. The flour may be any cereal flour or other starchy products; preferably it is a corn flour.

Before being mixed with the culture medium, said mixture is suitably diluted in boiling water, in weight proportions of 40-60% (more preferably 52 % with respect to water). For example: 100g of substance dissolved in boiling water are composed of 17g of modified starch, 35g of starchy flour and 48g of water.

After cooling, this first mixture is added, preferably in a 1:1 volumetric ratio, with the aforedescribed culture medium, in which the filamentary fungus had been previously inoculated and grown. The resulting solution is then added with suitable fillers and possible nutrients which, in cooperation with the rest of the formulation, confer stability and nutrition to the fungi, and allow obtaining granules having the desired consistency and volume.

Preferably, the filler is diatomaceous earth, and the nutrients are selected from the group comprising flours and sugars. A preferred filler is Celaton FPM 0.08. it is a product based on diatom shells, (unicellular silica algae) with grain size of about 0.08 microns. This product is capable of absorbing a defined amount of water, allowing obtaining the granules with the desired volume, thus protecting the microorganisms against possible external attacks (temperature variations, hygrometry, etc.).

Preferred among the flours usable as nutrients is the corn flour. This is a natural product capable of absorbing an amount of water several times greater than its own volume and, in the specific case, it also contributes to the volume of the granule. Furthermore, the corn flour represents an important source of nutrition for the filamentary fungi contained in the granules and is immediately available when dispersing into the soil to be treated.

The sugars help to enhance the viability of the fungi, in particular stabilizing the cellular membranes.

In the method object of the invention, the abovementioned fillers and possible nutrients are added to the mixture formed at point b). When only fillers are used, the filler is preferably diatomaceous earth. When fillers are used with nutrients it is preferable to use a mixture of diatomaceous earth and flour, to which sugars can be added in small amounts. A preferred mixture is made up of fillers at 30-50% (in particular 33%) by weight, and by flours at the remaining 70-50% (in particular 67%). If used, the sugars are generally present at amounts varying between 10 and 20% by weight with respect to the mixture of fillers and flours.

The fillers and possible nutrients are added, in mixed form or separately, to the mixture described at point b), until a compact paste is obtained. Preferably in said paste, the mixture of fillers and possible nutrients used at point c) represents from 15% to 50% by weight. For example: 34g of the mixture with fillers and nutrients are added to 100g of the mixture described at point b). Generally, the paste thus obtained has a moisture content in the range between 30 and 60%, preferably between 35 and 55%, more preferably around 47%. Thus, the resulting mixture is subjected to conventional granulation treatments, such as for example extrusion, obtaining granules with diametral dimensions preferably comprised between 3 and 5 mm. The moisture content of the granules before drying is substantially identical to that of the paste. The drying of the granules may be performed in a sterile airflow, at a temperature of 25-30°C. The moisture percentage is reduced, after drying, to a value lower than 13%, preferably in the range between 9 and 10% In such manner, the granules attain the desired consistency and volume.

The present invention comprises the granular product as such, as resulting from the abovementioned process. Such product is in granular form, dry to the touch, and is characterised in particular by containing one or more filamentary fungi, the modified starch and the starchy flour described in step b), and the suitable fillers and the possible nutrients described in step c). The granular product may be used as such, or formulated with other conventional ingredients according to per se known methods; the resulting pesticide composition equally forms an object of the invention. Lastly, the invention is extended to the use of the abovementioned products for treating a substrate infested by nematodes or other parasites sensitive to filamentary fungi.

There are various advantages linked to the present invention ad they are distinguished as follows.

For the production:
- low number of manipulations, which allows maintaining the sterility of the process;
- quick drying, given that the water content is already low in origin;
- a highly dispersible product, which allows a better evaluation of the microorganisms content;
- a process protecting the activity of the microorganisms.

For the user;
- the highly dispersible formulation allows different uses: scattered on bear soil, but also, advantageously, it can be added to the irrigation system;
- adding the product to the irrigation water, eliminates the need for additional treatments for dispersing the nematocide; the liquid product is dispersed uniformly on the surface and, advantageously, also in the deep layers of the soil, without requiring ploughing or other operations for moving the soil;
- dispersion in water occurs in quick times (within a few seconds) at ambient temperature, under slight stirring;
- the granular formulation with low moisture content generates a product easily manipulatable by the user, dry to contact, flowable, easy to load and unload from hoppers etc. without adhesion of the particles against the container walls.

The following examples of the invention, provided for illustrative and non-limiting purposes, were made using filamentary fungi of the Moniliales family, in particular using *Arthrobotrys conoides* Dreschsler filamentary fungus.

### EXPERIMENTAL PART

### Example 1

The filamentary fungus culture was obtained in a 2 litre reactor, containing 1.2 1 of culture medium. The reactor made up of a container with a round bottom, provided with a helical stirrer, a temperature regulator and cooling, an air inlet, as well as probes for detecting pH, O₂ concentration and temperature. The means, made up of 20 g/l of malt extract and 4 g/l of yeast extract, was sterilised before being inoculated with the *A. conoides* fungus conidia. The culture was protracted for 6 days from the inoculus at a temperature of about 27 °C. During the culture, culture medium sampling was performed to determine the dry mass (g/1) hence the number of propagules (CFU/l). In order to determine the dry mass, 20 ml of the culture medium were filtered, then dried in an oven at 100°C for 24 hours. The number of propagules was determined on 1 ml of culture medium. About 8 g/l of fungus are obtained at the end of the indicated period of time, with a number of propagules equivalent to 6.10⁹ per litre.

A mixture containing Cleargum and corn starch (1:1 ratio by weight) is dispersed in boiling water, at a concentration of 54% by weight. After cooling, the culture medium containing the fungus in the same proportions of the previously added water is added. Celaton FPM 0.08 is then added to the mixture thus obtained in amounts of 28% by weight with respect to this first mixture, up to obtaining a compact paste. This paste is introduced by means of a spatula into a syringe, then spread in regular amounts on an aluminium foil. After a few minutes of drying under an airflow at 30°C max, the moisture percentage of the product is equivalent to 7.9% and the granules freely separate from the aluminium foil.

After introducing a granule in 9 ml of sterile water and several dilutions it is possible to determine the number of propagules contained in a granule, which is equivalent to 8.10³ CFU/granule (arithmetic mean of determinations on five granules) corresponding to a survival percentage of 50%. This percentage is deemed more than satisfactory for the type of process described herein.

### Example 2

The test of this example was performed using the same fungal culture of example 1, but varying the proportions in the formulation. A mixture containing 18% of Cleargum and 36% of corn starch is mixed in an amount of boiling water forming 45% of the total mixture. After cooling, the culture medium - containing the fungus - - is added in amounts equivalent to the amount of water added previously. Then, Celaton FPM 0.08 is added to the mixture thus obtained in amounts equivalent to 25% by weight with respect to this first mixture, until a compact paste is obtained. After a few minutes of drying in an airflow at 30°C, the percentage of moisture of the product is equivalent to 8.8%. After dissolving a granule in 9 ml of sterile water and several dilutions it is possible to determine the number of propagules contained in a granule. There are 1.10⁴ CFU/granule, corresponding to a survival percentage of 66 %. Such percentage is deemed optimal for a process of the type described herein.

### Example 3

The test of this example is based on the same fungal culture of example 1, but varying the proportions in the formulation. A mixture containing 16% of Cleargum and 31.5% of corn starch is mixed with 52.5% of boiling water. After cooling, the culture medium containing the fungus, is added in amounts equivalent to the amount of water added previously. A mixture made up of 54% of corn starch and 46% of Celaton FPM 0.08 is then added to the mixture thus obtained, in amounts equivalent to 45% by weight with respect to this first mixture, until a compact paste is obtained. After a few minutes of drying in an airflow at 30°C, the humidity percentage of the resulting product is equivalent to 9%.

After dissolving a granule in 9 ml of sterile water and several dilutions it is possible to determine the number of propagules contained in a granule, which is equivalent to 1.2.10⁴ CFU/granule, corresponding to a survival percentage of 83 %. Such percentage is deemed high, for a process of the type described herein. After a month of storage in a plastic container, at a temperature comprised between 18 and 25°C, the survival percentage (number of propagules present with respect to those observed immediately after the preparation of the granules) was still very high, in the order of about 95%.

### Example 4

150 g of the granular product obtained in example 3 were dispersed in 1000 ml of water at ambient temperature, under slight stirring conditions by means of a magnetic stirrer at 500 rpm, for 5 minutes.

At the same time, 150 g of jellied pellets obtained according to example 1 of US2007/0292932 (reference) are treated under identical conditions. At the end of the stirring, both solutions are observed visually to evaluate the dissolution state of the product. As clear from figure 1, the reference jellied pellets 1 were still wholly integral, undissolved and sedimented on the bottom of the solution; on the contrary, the granules 2 of example 3 of the invention were perfectly dispersed. (Fig 1).

## Claims

1. Process for preparing granules containing filamentary fungi, comprising:
a) mixing a filamentary fungi culture with at least one modified starch and a starchy flour;
b) adding fillers and possible nutrients to the product of a), obtaining a paste that is subsequently subjected to granulation and drying.

2. Process according to claim 1, where the filamentary fungus belongs to the Moniliales family, preferably being *Arthrobotrys conoides* Dreschsler.

3. Process according to claims 1-2, where the culture medium contains one or more sources of carbon and/or nitrogen, preferably selected from among: malt extract, yeast extract, molasses, sucrose, corn steep liquor.

4. Process according to claims 1-3, where the modified starch is Cleargum and the starchy flour is a corn flour.

5. Process according to claims 1-4, where the modified starch and the starchy flour are present in ratios by weight comprised between 30:70 and 60:40.

6. Process according to claims 1-5, where the filler added in step b) is diatomaceous earth, and the possible nutrients are selected from among one or more flours and sugars.

7. Process according to claims 1-6, where in step b) the mixture obtained in a) is added with a mixture of fillers and flours in ratios by weight variable between 30:70 and 50:50, and optionally sugars, obtaining a paste with moisture comprised between 30 and 60%, preferably between 35 and 55%.

8. Process according to claims 1-7, where the granules obtained in step b) are dried up to a moisture percentage lower than 13%, preferably comprised between 9 and 10%.

9. Granular product comprising one or more filamentary fungi, at least one modified starch, at least one starchy flour, suitable fillers and possible nutrients.

10. Granular product according to claim 9, where the modified starch is Cleargum, the starchy flour is corn flour and the filler is diatomaceous earth and the possible nutrients are represented by sugars.

11. Granular product according to claims 9-10, where the filamentary fungus belongs to the Moniliales family, preferably being *Arthrobotrys conoides* Dreschsler.

12. Granular product obtained by the process described in claims 1-8.

13. Pesticide composition comprising the product described in claims 9-12.

14. Use of a product or composition described in claims 9-13, for treating a substrate infested by nematodes or other parasites sensitive to filamentary fungi.

15. Use according to claim 14, where the product or composition is dispersed in a liquid medium and administered on the substrate by spraying.
